# EUROPÄISCHE PATENTANMELDUNG

(11) **EP 3 118 694 A1**
(43) Veröffentlichungstag der Anmeldung: **18.01.2017**
(21) Anmeldenummer: 15176374.5
(22) Anmeldetag: 13.07.2015
(51) Int. Cl.: G05B 9/03, G05B 19/042, G05B 19/05, G06F 11/20

(54) **VERFAHREN ZUM BETREIBEN EINES REDUNDANTEN AUTOMATISIERUNGSSYSTEMS UND REDUNDANTES AUTOMATISIERUNGSSYSTEM**

(71) Anmelder: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(57) **Zusammenfassung**

Die Erfindung betrifft ein Verfahren zum Betreiben eines redundanten, mit einem Master (M) und einem Slave (S) versehenen Automatisierungssystems, wobei zur Steuerung eines technischen Prozesses der Master (M) ein Master-Steuerprogramm (P1) und der Slave (S) ein dem Master-Steuerprogramm (P1) entsprechendes Slave-Steuerprogramm (P2) pfadsynchron und zeitlich asynchron verarbeiten, wobei ferner für den Fall, dass der Master (M) ausfällt, der Slave (S) die Funktion des Masters (M) übernimmt, und wobei der Master (M) zur Verwirklichung der pfadsynchronen Verarbeitung der Steuerprogramme (P1, P2) dem Slave (S) Freigaben (F1, F2, ...) übermittelt, die dem Slave (S) anzeigen, bis zu welchem Verarbeitungsabschnitt der Slave (S) das Slave-Steuerprogramm (P2) verarbeiten darf. Es werden Maßnahmen vorgeschlagen, mittels derer Softerrors (transiente Fehler) nicht mehr zu einem Synchronisationsverlust und damit zu einem Redundanzverlust führen, wodurch die Verfügbarkeit der Prozesssteuerung verbessert wird.

## Beschreibung

Die Erfindung betrifft ein Verfahren eines redundanten, mit einem Master und einem Slave versehenen Automatisierungssystems, wobei zur Steuerung eines technischen Prozesses der Master ein Master-Steuerprogramm und der Slave ein dem Master-Steuerprogramm entsprechendes Slave-Steuerprogramm pfadsynchron und zeitlich asynchron verarbeiten, wobei ferner für den Fall, dass der Master ausfällt, der Slave die Funktion des Masters übernimmt, und der Master zur Verwirklichung der pfadsynchronen Verarbeitung der Steuerprogramme dem Slave Freigaben übermittelt, die dem Slave anzeigen, bis zu welchem Verarbeitungsabschnitt der Slave das Slave-Steuerprogramm verarbeiten darf. Ferner betrifft die Erfindung ein redundantes Automatisierungssystem gemäß dem Oberbegriff des Anspruchs 4, welches zur Durchführung des Verfahrens geeignet ist.

Ein derartiges Verfahren sowie ein redundantes Automatisierungssystem ist aus der EP 2 657 797 A1 bekannt. Die Synchronisation des Master und des Slaves erfolgt nach dem Auftreten eines Ereignisses derart, dass sowohl der Master als auch der Slave aufgrund dieses Ereignisses gleiche Programmpfade durchlaufen, wobei die Durchläufe zeitlich asynchron erfolgen. Dies bedeutet, dass im Hinblick auf die jeweilige Programmverarbeitung der Master dem Slave zeitlich vorausläuft bzw. der Slave dem Master zeitlich nachläuft. Unter einem "Nachlauf" bzw. "Vorauslauf" wird in diesem Zusammenhang die zeitliche Differenz zwischen dem Beginn der Verarbeitung von Verarbeitungsabschnitten des Master-Steuerprogramms und dem Beginn der Verarbeitung der Verarbeitungsabschnitte des Slave-Steuerprogramms verstanden. Mittels einer Freigabe zeigt der Master dem Slave an, bis zu welchen Verarbeitungsabschnitten der Slave sein Slave-Steuerprogramm verarbeiten darf, wobei diese Verarbeitungsabschnitte den bereits verarbeiteten Verarbeitungsabschnitten des Master-Steuerprogramms von einer vorherigen Freigabe bis zu der Freigabe entsprechen.

Es kann nun vorkommen, dass - z. B. durch kosmische Strahlung verursachte - so genannte Softerrors (transiente Fehler) Abweichungen in der Ausführung des Master- oder Steuerprogramms bewirken oder dass derartige Softerrors Datenverfälschungen verursachen, die erst im weiteren Verlauf der jeweiligen Programmverarbeitung zu Abweichungen in der Programmausführung führen. Dies bedeutet, dass der Master und der Slave nicht mehr die gleichen Programmpfade abarbeiten und daher die beiden Steuerprogramme nicht mehr pfadsynchron verarbeitet werden, was sich nachteilig auf die Verfügbarkeit des Automatisierungssystems auswirkt. In diesen Fällen kann häufig nicht festgestellt werden, welches der beiden Systeme (der Master oder der Slave) fehlerhaft ist. Die einzig mögliche Entscheidung ist dann, zufällig eines der beiden Systeme in einen STOP-Zustand zu setzen und nur eines der beiden Systeme weiterlaufen zu lassen. Eine derartige Entscheidung vermindert die Verfügbarkeit.

Der Erfindung liegt daher die Aufgabe zugrunde, ein Verfahren der eingangs genannten Art anzugeben, welches die Verfügbarkeit des Automatisierungssystems verbessert. Darüber hinaus ist ein redundantes Automatisierungssystem zur Durchführung des Verfahrens zu schaffen.

Diese Aufgabe wird im Hinblick auf das Verfahren durch die im kennzeichnenden Teil des Anspruch 1 angegebenen, bezüglich des redundanten Automatisierungssystems durch die im kennzeichnenden Teil des Anspruchs 4 angegebenen Maßnahmen gelöst.

Vorteilhaft ist, dass Softerrors bzw. transiente Fehler nicht mehr zu einem Synchronisationsverlust und damit zu einem Redundanzverlust führen, wodurch die Verfügbarkeit der Prozesssteuerung verbessert wird.

In einer Ausgestaltung der Erfindung werden Prozessausgangswerte (Sollwerte) dem Prozess bzw. der Prozessperipherie nicht übermittelt, falls der Verlust der Pfadsynchronität erkannt wird. Dadurch wird z. B. sichergestellt, dass fehlerbehaftete oder falsch errechnete Prozessausgangswerte den Aktoren nicht übermittelt werden.

In einer weiteren Ausgestaltung der Erfindung ist vorgesehen, dass Master-Hashwerte für den Master-Speicher und Slave-Hashwerte für den Slave-Speicher ermittelt werden, dass die Slave-Hashwerte dem Master übermittelt werden, wobei die Master- und die Slave-Hashwerte durch den Master verglichen werden. Mittels des Vergleichsergebnisses werden Softerrors bzw. transiente Fehler frühzeitig "erkannt", wodurch die jeweils letzten Master-Verarbeitungsabschnitte des Master-Steuerprogramms und die jeweils letzten Slave-Verarbeitungsabschnitte des Slave-Steuerprogramms mit dem jeweils zuletzt aktualisierten Master- und Slave-Abbild wiederholt werden können.

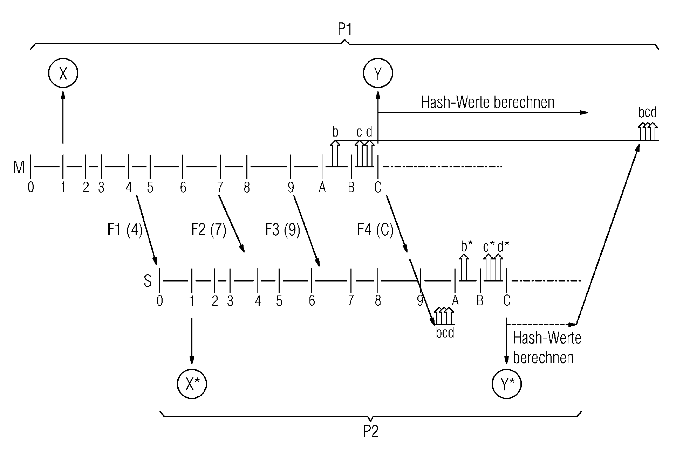

Die Erfindung wird nachfolgend anhand eines Ausführungsbeispiels unter Bezugnahme auf die einzige Figur der Zeichnung näher erläutert. Die Figur der Zeichnung zeigt in vereinfachter Darstellung einen Ablauf einer zeitlich asynchronen Kopplung eines Masters und eines Slaves eines redundanten Automatisierungssystems.

In der Figur ist mit M ein Master und mit S ein Slave bezeichnet, wobei der Master M im Hinblick auf die Steuerung eines technischen Prozesses führend ist und die Prozesssteuerung übernimmt und wobei der Slave S nur dann die Masterfunktion bzw. die Masterschaft übernimmt, falls der Master M aufgrund einer Störung ausfällt.

Der Master M verarbeitet ein Master-Programm P1 zur Steuerung des technischen Prozesses, wobei auch der Slave S ein diesem Master-Steuerprogramm P1 entsprechendes Slave-Steuerprogramm P2 verarbeitet. Beide Steuerprogramme P1, P2 weisen eine Vielzahl von Verarbeitungsabschnitten auf, wobei die Steuerprogramme P1, P2 an dem jeweiligen Beginn und dem jeweiligen Ende jedes Verarbeitungsabschnittes unterbrechbar sind. Beginn und Ende eines jeden Verarbeitungsabschnittes, welcher gewöhnlich eine Vielzahl von Programmcodes umfasst, repräsentieren somit unterbrechbare Programm- bzw. Unterbrechungsstellen 0, 1, 2, ... , A, B, .... An diesen Programm- bzw. Unterbrechungsstellen 0, 1, 2, ... kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... das jeweilige Steuerprogramm P1, P2 unterbrochen werden, damit der Master M und der Slave S Freigaben, Quittungen, Zustandsinformationen oder sonstige Informationen über eine hier nicht dargestellte Kommunikationsverbindung austauschen können. Zu einem Zeitpunkt des Auftretens einer nach Ablauf eines vorgegebenen bzw. vorgebbaren Zeitintervalls folgenden Unterbrechungsstelle - vorzugsweise der ersten auf das jeweilige Zeitintervalls folgenden Unterbrechungsstelle -, übermittelt der Master M dem Slave S eine Freigabe bzw. ein Freigabesignal, welches dem Slave S anzeigt, bis zu welchem Verarbeitungsabschnitt der Slave S das Steuerprogramm P2 verarbeiten darf. Diese Verarbeitungsabschnitte des Steuerprogramms P2 entsprechen denen, die der Master M bereits während der Verarbeitung des Steuerprogramms P1 verarbeitet hat.

Im vorliegenden Ausführungsbeispiel sind vier Freigaben F1, F2, F3, F4 gezeigt, welche der Master M während der Verarbeitung des Master-Steuerprogramms P1 dem Slave S übermittelt. Die Freigabe F1 umfasst Informationen für den Slave S, dass dieser sein zu verarbeitendes Slave-Steuerprogramm P2 bis zu einer Unterbrechungsstelle 4 verarbeiten darf - was in der Zeichnung durch den Zusatz (4) am Bezugszeichen F1 gekennzeichnet ist -, wobei die Unterbrechungsstelle 4 des Slave-Steuerprogramms P2 der Unterbrechungsstelle 4 des Master-Steuerprogramms P1 entspricht. Dies bedeutet, dass aufgrund der Freigabe F1 der Slave S die Verarbeitungsabschnitte des Slave-Steuerprogramms P2 verarbeiten darf, welche den Verarbeitungsabschnitten des Master-Steuerprogramms P1 bis zur Unterbrechungsstelle 4 entsprechen. Die Verarbeitung dieser Verarbeitungsabschnitte mittels des Slaves S erfolgt also zeitlich asynchron zur Verarbeitung der entsprechenden Verarbeitungsabschnitte mittels des Masters M, wobei die Verarbeitung jedoch pfadsynchron erfolgt und wobei nach der Verarbeitung der Verarbeitungsabschnitte des Slave-Steuerprogramms P2 durch den Slave S eine Bearbeitung von weiteren Verarbeitungsabschnitten durch den Slave S nur dann erfolgt, wenn der Master M dem Slave S eine weitere Freigabe übermittelt. Im vorliegenden Ausführungsbeispiel zeigt der Master M dem Slave S mittels der weiteren Freigabe F2 an, dass der Slave sein Slave-Steuerprogramm P2 bis zur Unterbrechungsstelle 7 verarbeiten darf (gekennzeichnet durch den Zusatz (7) am Bezugszeichen F2. Entsprechend wird mittels der Freigabe F3 dem Slave S mitgeteilt, dass der Slave S sein Slave-Steuerprogramm P2 bis zur Unterbrechungsstelle 9 und mittels der Freigabe F4 bis zur Unterbrechungsstelle C verarbeiten darf. Die weitere Verarbeitung des Master- und des Slave-Steuerprogramms P1, P2 erfolgt - wie beschrieben - in der entsprechenden Art und Weise, es werden die gleichen Programmpfade des jeweiligen Steuerprogramms P1, P2 zeitlich asynchron durchlaufen, wobei der Slave S seine Bearbeitung nur dann fortsetzt, wenn dieser dazu vom Master M durch eine weitere Freigabe aufgefordert wird.

Es kann nun vorkommen, dass so genannte Softerrors Abweichungen in der Ausführung des Master-Steuerprogramms P1 oder des Slave-Steuerprogramms P2 bewirken oder dass derartige Softerrors Datenverfälschungen verursachen, die erst im weiteren Verlauf der jeweiligen Programmverarbeitung zu Abweichungen in der Programmausführung führen. Dies bedeutet, dass der Master M und der Slave S nicht mehr die gleichen Programmpfade abarbeiten, d. h. die beiden Steuerprogramme P1, P2 werden nicht mehr pfadsynchron verarbeitet, was sich nachteilig auf die Verfügbarkeit des Automatisierungssystems auswirkt.

Um die Verfügbarkeit des Automatisierungssystems zu verbessern, ist daher vorgesehen, zu vorgegebenen bzw. vorgebaren Master-Verarbeitungsabschnitten im Master-Steuerprogramm P1 jeweils ein Master-Abbild von relevanten Master-Daten sowie zu vorgegebenen diesen jeweiligen Master-Verarbeitungsabschnitten entsprechenden Slave-Verarbeitungsabschnitten im Slave-Steuerprogramm P2 jeweils ein Slave-Abbild von Slave-Daten zu erstellen. Dabei werden unter relevanten Master- bzw. Slave-Daten die Zustand-Daten verstanden, welche für redundant zu verarbeitende Systemteile von Bedeutung sind. Ferner ist dazu vorgesehen, dass der Slave S die Freigaben F1, ... und/oder weitere vom Master M dem Slave S übermittelte Informationen zur Erkennung der Pfadsynchronität auswertet und das Ergebnis dieser Auswertung dem Master M zuführt. Derartige Informationen sind beispielsweise die Zählerstände eines Master- und eines Slave-Befehlszählers, Kennungen eines jeweils zu verarbeitenden Programmpfades oder eines Threads, oder Prozessausgangswerte (Sollwerte), welche sowohl das Masterals auch das Slave-Steuerprogramm P1, P2 aufgrund von Prozesseingangswerten (Istwerten) von Sensoren berechnet. Für den Fall, dass z. B. der Master M dem Slave S mittels einer Freigabe einen Programmpfad im Slave-Steuerprogramm P2 zur Verarbeitung durch den Slave S anzeigt bzw. freischaltet, der Slave S jedoch z. B. einen anderen Programmpfad durchläuft oder einen Thread bearbeitet, so weist dies auf eine Störung der Pfadsynchronität hin. Der Slave S zeigt dem Master M diesen Fehler an, aufgrund dessen der Master M dem Slave S eine Rollback-Anweisung bzw. einen Rollback-Befehl übermittelt und die Verarbeitung des Master-Steuerprogramms mit dem zuletzt aktualisierten Master-Abbild wiederholt. Aufgrund der empfangenen Rollback-Anweisung bzw. des empfangenen Rollback-Befehls wiederholt der Slave ebenfalls die Verarbeitung des Slave-Steuerprogramms mit dem zuletzt aktualisierten Slave-Abbild. Für den Fall allerdings, dass der Slave S dem Master M keinen Fehler meldet, aktualisiert der Master M sein Master-Abbild mit den aktuellen relevanten Master-Daten und der Slave S sein Slave-Abbild mit den aktuellen relevanten Slave-Daten.

Im vorliegenden Ausführungsbeispiel sind mit X und Y der Beginn von vorgegeben Verarbeitungsabschnitten des Master-Steuerprogramms P1 und mit X* und Y* der Beginn von vorgegeben Verarbeitungsabschnitten des Slave-Steuerprogramms P2 bezeichnet - im Folgenden als Punkte X, Y, X*, Y* benannt, wobei diese Slave-Verarbeitungsabschnitte im Hinblick auf die pfadsynchrone Verarbeitung der Steuerprogramme P1, P2 denen der Master-Verarbeitungsabschnitte entsprechen. Es wird angenommen, dass zu den Punkten X, X* keine Unterschiede bezüglich Verarbeitung der Steuerprogramme P1, P2 bzw. keine Unterschiede in den Verarbeitungspfaden vorliegen. Zu diesem Punkt X im Steuerprogramm P1 erstellt der Master M ein Abbild von relevanten Master-Daten und zum Punkt X* der Slave S ein Abbild von relevanten Slave-Daten. Während der weiteren Verarbeitung des Master-Steuerprogramms P1 übermittelt der Master M - wie erläutert - dem Slave S die Freigaben F1, F2 ... sowie die weiteren Master-Informationen, welche der Slave S auswertet um Unstimmigkeiten bzw. Fehler im Hinblick auf die Pfadsynchronität zu erkennen. Ferner wird angenommen, dass bis zu der Unterbrechungsstelle C bzw. bis zum Punkt Y des Master-Steuerprogramms P1 der Slave S dem Master M keinen Verlust der Pfadsynchronität meldet, wobei anzumerken ist, dass der Slave S dem Master M nachläuft und zu dem Zeitpunkt, bis zu welchem der Master M sein Master-Steuerprogramm P1 bis zum Punkt C bzw. Y verarbeitet hat, der Slave S sein Slave-Steuerprogramm P2 erst bis zum Punkt 9 verarbeitet hat. Während der Verarbeitung des Master-Steuerprogramms P1 vom Punkt A bis zum Punkt C bzw. Y errechnet dieses Master-Steuerprogramm P1 im vorliegenden Beispiel Prozessausgangswerte b, c, d, die der Master M nicht - wie gewöhnlich - unmittelbar dem Prozess bzw. der Prozessperipherie zuführt. Stattdessen speichert der Master M die Prozessausgangswerte b, c, d zunächst ab, erstellt ein Master-Sicherungsabbild seiner relevanten Master-Daten und übermittelt dem Slave S die Prozessausgangswerte b, c, d mit der Freigabe F4. Erst dann, wenn der Master M vom Slave S die Meldung erhält, dass kein Pfadsynchronisations-Fehler vorliegt, führt der Master M die Prozessausgangswerte b, c, d der Prozessperipherie zu und aktualisiert das zum Punkt X gültige Master-Abbild mit den Daten des Master-Sicherungsabbildes. Aufgrund dessen, dass der Slave S dem Master M nachläuft, kann der Slave S eine derartige Meldung bzw. Anzeige erst nach der Verarbeitung des Slave-Steuerprogramms P2 bis zum Punkt C bzw. bis zum Punkt Y* im Slave-Steuerprogramm P2 dem Master M übermitteln. Der Slave S vergleicht die vom Master M übermittelten Prozessausgangswerte b, c, d mit den vom Slave-Steuerprogramm P2 errechneten Prozessausgangswerten b*, c*, d*, wobei für den Fall, dass das Vergleichsergebnis bzw. Auswerteergebnis keine Abweichungen zwischen den Prozessausgangswerten b, c, d und den Prozessausgangswerten b*, c*, d* anzeigen, der Slave S dem Master M die pfadsynchrone Verarbeitung der Steuerprogramme P1, P2 meldet. In diesem Fall erzeugt der Slave S zum Punkt Y* ein Slave-Sicherungsabbild mit den aktuellen relevanten Slave-Daten und der Master M übermittelt die Prozessausgangswerte b, c, d dem Prozess, wobei im vorliegenden Beispiel vorausgesetzt wird, dass keine sonstige Abweichung von einer pfadsynchronen Verarbeitung erkannt wird. Das Slave-Abbild zum Punkt X* wird erst dann mit den Daten des Slave-Sicherungs-Abbildes aktualisiert, falls der Slave S eine weitere Freigabe empfängt und bis zu dieser Freigabe keinen Rollback-Befehl des Masters M empfangen hat. Für den Fall allerdings, dass der Slave S eine Abweichung erkennt und dem Master M meldet, übermittelt der Master M dem Slave S einen "Rollback-Befehl" bzw. eine "Rollback-Anweisung" und wiederholt die Verarbeitung seines Master-Steuerprogramms P1 vom Punkt X bis Punkt Y mit dem zuletzt gültigen Master-Abbild zum Punkt X. Aufgrund des empfangenen "Rollback-Befehls" bzw. der empfangenen "Rollback-Anweisung" wiederholt der Slave S ebenfalls die Verarbeitung seines Slave-Steuerprogramms P2 vom Punkt X* bis Punkt Y* mit dem zuletzt gültigen Slave-Abbild zum Punkt X* und den neu vom Master M empfangenen Freigaben und Daten.

Um transiente Fehler im Arbeitsspeicher von Master oder Slave zu entdecken, bevor diese sich evtl. in einer fehlerhaften Verarbeitung niederschlagen, oder um Abweichungen bezüglich der pfadsynchronen Verarbeitung der Steuerprogramme P1, P2 möglichst früh zu erkennen, können ferner Master-Hashwerte für den Master-Speicher und Slave-Hashwerte für den Slave-Speicher berechnet und ausgewertet werden, wobei in diesen Speichern das jeweilige Abbild der relevanten Master- und Slave-Daten hinterlegt ist. Der Slave S errechnet z. B. ab dem Punkt Y* die Slave-Hashwerte für seinen Speicher und übermittelt diese dem Master M, der ebenfalls die Master-Hashwerte für seinen Master-Speicher ab dem Punkt Y berechnet. Der Master M vergleicht die Master- und die dem Master M übermittelten Slave-Hashwerte, wobei in Abhängigkeit des Vergleichs- bzw. Auswerteergebnisses ebenfalls entweder sowohl das Master- als auch das Slave-Abbild aktualisiert werden oder die jeweils letzten Master-Verarbeitungsabschnitte des Master-Steuerprogramms P1 und die jeweils letzten Slave-Verarbeitungsabschnitte des Slave-Steuerprogramms P2 mit dem jeweils zuletzt aktualisierten Master- und Slave-Abbild wiederholt werden.

## Patentansprüche

1. Verfahren zum Betreiben eines redundanten, mit einem Master (M) und einem Slave (S) versehenen Automatisierungssystems, wobei
- zur Steuerung eines technischen Prozesses der Master (M) ein Master-Steuerprogramm (P1) und der Slave (S) ein dem Master-Steuerprogramm (P1) entsprechendes Slave-Steuerprogramm (P2) pfadsynchron und zeitlich asynchron verarbeiten,
- für den Fall, dass der Master (M) ausfällt, der Slave (S) die Funktion des Masters (M) übernimmt, und
- der Master (M) zur Verwirklichung der pfadsynchronen Verarbeitung der Steuerprogramme (P1, P2) dem Slave (S) Freigaben (F1, F2, ...) übermittelt, die dem Slave (S) anzeigen, bis zu welchem Verarbeitungsabschnitt der Slave (S) das Slave-Steuerprogramm (P2) verarbeiten darf,
**dadurch gekennzeichnet, dass**
- zu vorgegebenen Master-Verarbeitungsabschnitten im Master-Steuerprogramm (P1) jeweils ein Master-Abbild von Master-Daten und zu vorgegebenen den jeweiligen Master-Verarbeitungsabschnitten entsprechenden Slave-Verarbeitungsabschnitten im Slave-Steuerprogramm (P2) jeweils ein Slave-Abbild von Slave-Daten erstellt wird,
- durch den Slave (S) die Freigaben und/oder weitere Master-Informationen zur Erkennung der Pfadsynchronität ausgewertet werden und das Auswerteergebnis dem Master (M) übermittelt wird, wobei in Abhängigkeit des Auswerteergebnisses entweder
- sowohl das Master- als auch das Slave-Abbild aktualisiert werden,
oder
- die jeweils letzten Master-Verarbeitungsabschnitte des Master-Steuerprogramms (P1) und die jeweils letzten Slave-Verarbeitungsabschnitte des Slave-Steuerprogramms (P2) mit dem jeweils zuletzt aktualisierten Master- und Slave-Abbild wiederholt werden.

2. Verfahren nach Anspruch 1, **dadurch gekennzeichnet, dass** Prozessausgangswerte (b, c, d) dem Prozess nicht übermittelt werden, falls der Verlust der Pfadsynchronität erkannt wird.

3. Verfahren nach Anspruch 1 oder 2, **dadurch gekennzeichnet, dass** Master-Hashwerte für den Master-Speicher und Slave-Hashwerte für den Slave-Speicher ermittelt werden, dass die Slave-Hashwerte dem Master (M) übermittelt werden, wobei die Master- und die Slave-Hashwerte durch den Master (M) verglichen werden.

4. Redundantes Automatisierungssystem mit einem Master (M) und einem Slave (S), wobei
- zur Steuerung eines technischen Prozesses der Master (M) ein Master-Steuerprogramm (P1) und der Slave (S) ein dem Master-Steuerprogramm (P1) entsprechendes Slave-Steuerprogramm (P2) pfadsynchron und zeitlich asynchron verarbeiten,
- für den Fall, dass der Master (M) ausfällt, der Slave (S) die Funktion des Masters (M) übernimmt, und
- der Master (M) zur Verwirklichung der pfadsynchronen Verarbeitung der Steuerprogramme (P1, P2) dem Slave (S) Freigaben (F1, F2, ...) übermittelt, die dem Slave (S) anzeigen, bis zu welchem Verarbeitungsabschnitt der Slave (S) das Slave-Steuerprogramm (P2) verarbeiten darf,
**dadurch gekennzeichnet, dass**
- der Master zu vorgegebenen Master-Verarbeitungsabschnitten im Master-Steuerprogramm (P1) jeweils ein Master-Abbild von Master-Daten und der Slave (S) zu vorgegebenen den jeweiligen Master-Verarbeitungsabschnitten entsprechenden Slave-Verarbeitungsabschnitten im Slave-Steuerprogramm (P2) jeweils ein Slave-Abbild von Slave-Daten erstellt,
- den Slave (S) die Freigaben und/oder weitere Master-Informationen zur Erkennung der Pfadsynchronität auswertet und das Auswerteergebnis dem Master (M) übermittelt, wobei in Abhängigkeit des Auswerteergebnisses entweder
- sowohl der Master das Master-Abbild als auch der Slave das Slave-Abbild aktualisiert,
oder
- der Master (M) die letzten Master-Verarbeitungsabschnitte des Master-Steuerprogramms (P1) mit dem zuletzt aktualisierten Master-Abbild und der Slave (S) die letzten Slave-Verarbeitungsabschnitte des Slave-Steuerprogramms (P2) mit dem zuletzt aktualisierten Slave-Abbild wiederholt.

5. Redundantes Automatisierungssystem nach Anspruch 4, **dadurch gekennzeichnet, dass** der Master (M) Prozessausgangswerte (b, c, d) dem Prozess nicht übermittelt, falls der Master (M) den Verlust der Pfadsynchronität erkennt.

6. Redundantes Automatisierungssystem nach Anspruch 4 oder 5, **dadurch gekennzeichnet, dass** der Master (M) Master-Hashwerte für den Master-Speicher und der Slave (S) Slave-Hashwerte für den Slave-Speicher ermittelt, dass der Slave (S) die Slave-Hashwerte dem Master (M) übermittelt, wobei der Master (M) die Master- und die Slave-Hashwerte vergleicht.
